# EUROPÄISCHE PATENTSCHRIFT

(11) **EP 0 659 604 B1**
(45) Veröffentlichungstag und Bekanntmachung des Hinweises auf die Patenterteilung: **11.12.1996**
(21) Anmeldenummer: 94116981.5
(22) Anmeldetag: 27.10.1994
(51) Int. Cl.: B60K 15/077

(54) **Kraftstoff-Behälteranordnung mit einem Speicherbehälter in einem befüllbaren Hauptbehälter**
Fuel tank arrangement with a storage tank in a fillable main tank
Arrangement d'un réservoir de carburant avec un réservoir de stockage dans un réservoir principal remplissable

(30) Priorität: 24.12.1993 DE 4344641
(43) Veröffentlichungstag der Anmeldung: 28.06.1995
(73) Patentinhaber: Volkswagen Aktiengesellschaft, 38436 Wolfsburg (DE)
(72) Erfinder: Buchmann, Volker, Dipl.-Ing., D-38114 Braunschweig (DE); Gerdtz, Uwe, Dipl.-Ing., D-38553 Wasbüttel (DE); Schmidtchen, Jörg, Dipl.-Ing., D-38527 Meine (DE)

(56) Entgegenhaltungen:
- GB-A- 2 172 864

## Beschreibung

Die Erfindung betrifft eine Kraftstoff-Behälteranordnung gemäß dem Oberbegriff des Patentanspruchs 1. Eine derartige Anordnung ist in GB-A-2172864 beschrieben.

Zur Speisung von in Kraftfahrzeugen angeordneten Brennkraftmaschinen existieren in großer Anzahl Kraftstoff-Behälteranordnungen, die in einem über einen Einfüllstutzen befüllbaren Hauptbehälter einen Speicherbehälter enthalten, in den eine Kraftstoffrückleitung von der Maschine (oder einer Förderpumpe) einmündet und die beispielsweise über Klappenventile (DE-PS 27 48 963, B65D 90/00) zeitweilig derart in Strömungsverbindung mit dem Hauptbehälter stehen, daß sie zwar von diesem her mit Kraftstoff gespeist werden, aber ein Abfließen von Kraftstoff aus dem Speicherbehälter in den Hauptbehälter bei Kurvenfahrten verhindert ist. Damit steht, zumindest während einer gewissen Zeit, auch bei durch Kurvenfahrten bedingten Verlagerungen des Kraftstoffvorrats im Hauptbehälter in dem Speicherbehälter ein Kraftstoffvorrat zur Speisung der Maschine zur Verfügung.

Üblicherweise entspricht der mittlere Kraftstoffpegel im Speicherbehälter demjenigen im Hauptbehälter, da die Kraftstoffversorgung über einen in den Speicherbehälter einmündenden Vorlauf in allen Phasen des Betriebs der Maschine erfolgt. Eine Speicherung von Kraftstoff im Speicherbehälter erfolgt bei diesem Stand der Technik also nur während Kurvenfahrten, nicht aber in dem Sinne, daß der Speicherbehälter erst nach Absinken des Pegels im Hauptbehälter unter einen vorgegebenen Mindestwert entleert wird.

Demgegenüber ist die aus der DE-OS 32 24 919, B60K 15/02, bekannte Behälteranordnung mit in einem Hauptbehälter angeordnetem Speicherbehälter so ausgelegt, daß der Speicherbehälter bis zur völligen Entleerung des Hauptbehälters gefüllt ist und erst anschließend daran entleert wird. Da auch bei diesem Stand der Technik der Vorlauf stets in den Speicherbehälter einmündet, sind zusätzliche Maßnahmen zum Transport von Kraftstoff aus dem Hauptbehälter in den Speicherbehälter erforderlich. Dabei kann es sich um eine Pumpe in einer vom Hauptbehälter zum Speicherbehälter führenden Überlaufleitung handeln; die Pumpe muß, da der Rücklauf in den Hauptbehälter einmündet, so auslegt sein, daß sie zumindest die jeweils der Maschine zugeführte Kraftstoffmenge in den Speicherbehälter nachliefert. Eine andere Möglichkeit der Sicherstellung der Füllung des Speicherbehälters (bis zur Entleerung des Hauptbehälters) besteht darin, unter Verzicht auf eine derartige Pumpe den Speicherbehälter tiefer als den Hauptbehälter anzuordnen, also beispielsweise als Vertiefung im Boden des Hauptbehälters auszubilden.

Während also die erstbeschriebene Möglichkeit eine zusätzliche Pumpe und damit einen zusätzlichen Energieaufwand erfordert, bedingt die zweitgenannte Möglichkeit eine komplizierte Form des Hauptbehälters, die häufig Schwierigkeiten bei der Unterbringung der Behälteranordnung in einem Kraftfahrzeug macht.

Ergänzend sei bezüglich dieses Standes der Technik darauf hingewiesen, daß die dort beschriebene Anordnung einen Hauptpegelsensor für den Kraftstoffpegel im Hauptbehälter und einen Hilfspegelsensor für den Kraftstoffpegel im Speicherbehälter enthält; Sinn der gesamten Anordnung ist eine genaue Pegelmessung auch dann, wenn der Kraftstoffpegel im Hauptbehälter einen vorgegebenen Mindestwert unterschritten hat.

Das DE-GM 92 07 323, B60K 15/06, beschreibt im Prinzip einen Kraftstofftank, der durch eine Zwischenwand in einen Hauptbehälter und einen Speicherbehälter unterteilt ist, der einen üblichen zusätzlichen Reservekanister ersetzen soll. Der Rücklauf von der Maschine bzw. von der Kraftstoffpumpe mündet stets in den Speicherbehälter, der in einem oberen Bereich der Zwischenwand in Strömungsverbindung mit dem Hauptbehälter steht. Beiden Behältern ist je ein Saugrohr zugeordnet; beide Saugrohre führen zu einem von Hand betätigbaren Ventil, so daß sie wahlweise mit dem Kraftstoff-Vorlauf verbindbar sind. Hier stellt also der Speicherbehälter einen echten Speicher oder Reservebehälter dar, da er nach Entleerung des Hauptbehälters von Hand über das Ventil zur Kraftstoffbelieferung der Maschine herangezogen wird.

Die Wirkungs- oder Arbeitsweise dieses bekannten "Kombitanks" ist aber abhängig von der Aufmerksamkeit der Bedienungsperson. Vergißt diese nach einem erneuten Tankvorgang das Ventil auf Speisung der Maschine aus dem Hauptbehälter zurückzustellen, so erfolgt nach einer relativ kurzen Fahrstrecke zunächst die Entleerung des - relativ kleinvolumigen - Speicherbehälters, und es kommt überraschend schnell zum Stillstand der Maschine, obwohl der größte Teil des gerade nachgefüllten Kraftstoffvolumens noch zur Verfügung steht. Außerdem stellt diese Anordnung die Kraftstoffversorgung der Maschine bei fahrdynamikbedingten Kraftstoffverlagerungen nicht sicher.

Aus der GB 2 172 864 A ist ein Kraftstoffversorgungssystem bekannt, in dem ein Behälter mit einer Kraftstofförderpumpe auf den Boden eines Kraftstofftanks eingesetzt ist. Der Behälter steht in seinem oberen Bereich via eines Überlaufs mit dem Kraftstofftank in Verbindung und wird von einer Kraftstoffrücklaufleitung gespeist. Die Kraftstoffpumpe saugt über ihre Ansaugleitung den Kraftstoff durch ein engmaschiges Sieb direkt aus dem Kraftstofftank ab. Wenn die Füllhöhe im Kraftstofftank derart abgenommen hat, daß in Kurvenfahrten, bedingt durch die auf den Kraftstoff wirkenden Fliehkräfte, kurzzeitig der Kraftstoff von dem Sieb wegschwabbt, fließt über ein Ventil Kraftstoff aus dem Behälter zwischen das Sieb und die Ansaugleitung. Sobald der Kraftstoffpegel in dem Tank unterhalb des Ventils liegt, bleibt dieses ständig geöffnet, so daß sich der Kraftstoff aus dem Kanister über das Ventil durch das Sieb entleeren könnte. Um dieses Leeren zu verhindern oder zu verringern, ist das Ventil als Drosselventil ausgebildet, das weniger Kraftstoff ausfließen läßt, als über die Rücklaufleitung in den Behälter hineinfließt. Dies führt jedoch dazu, daß bei einem fast leeren Tank die Pumpe über die Ansaugleitung - obwohl der Behälter noch teilweise mit Kraftstoff gefüllt ist - Luft ansaugt, da die Kraftstoffdurchflußmenge durch das Ventil stets kleiner ist als die Ansaugleistung der Pumpe.

Der Erfindung liegt die Aufgabe zugrunde, eine gattungsgemäße Kraftstoff-Behälteranordnung zu schaffen, die mit minimalem Zusatzaufwand einen selbsttätigen Übergang von der Kraftstoffbelieferung der Maschine aus dein Hauptbehälter in eine solche aus dem Speicherbehälter bei leerem Hauptbehälter bzw. bei Kurvenfahrt sicherstellt.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

In Abhängigkeit von dem Ausgangssignal dieses Pegelsenors, der gemäß Anspruch 2 auch rein mechanisch arbeiten kann, erfolgt also die Herstellung einer Strömungsverbindung zwischen dem Vorlauf einerseits und dem Hauptbehälter bzw. dem Speicherbehälter andererseits, wobei der Pegelsensor auch Kraftstoffverlagerungen im Hauptbehälter bei Kurvenfahrten signalisiert.

An dieser Stelle sei eingefügt, daß in diesem Zusammenhang unter dem Begriff "Hauptbehälter" bzw. "Speicherbehälter" auch das Volumen des jeweiligen Behälters zu verstehen ist.

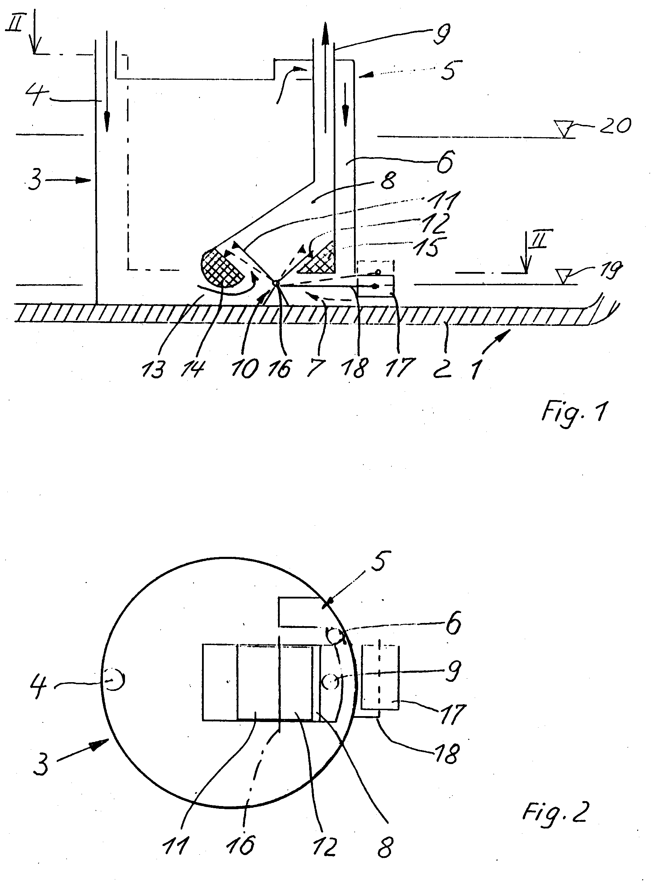

Ein Ausführungsbeispiel der Erfindung wird im folgenden anhand der Zeichnung erläutert, deren Figur 1 einen senkrechten Schnitt und deren Figur 2 den in Figur 1 bei II-II angedeuteten Horizontalschnitt zeigt.

Von dem allgemein mit 1 bezeichneten Hauptbehälter erkennt man im wesentlichen nur den Boden 2. Auf diesem sitzt der wesentlich kleinere Speicherbehälter 3, in den der Kraftstoff-Rücklauf 4 von der Maschine bzw. einer außerhalb des Behälters befindlichen Pumpe einmündet, so daß in den Speicherbehälter 3 dauernd relativ warmer Kraftstoff einläuft.

Über den Überlauf 5 steht das Volumen des Speicherbehälters 3 dauernd in Strömungsverbindung mit dem außerhalb des Speicherbehälters 3 befindlichen Volumen des Hauptbehälters 1. Dieser Überlauf 5 enthält das Fallrohr 6, das unmittelbar vor dem Zulauf 7 zu der in eine Wand des Speicherbehälters 3 eingearbeiteten Kammer 8 in den Hauptbehälter 1 einmündet. Von der Kammer 8 geht der bei 9 angedeutete Vorlauf zur Maschine bzw. zu einer Kraftstoffpumpe ab.

Am Boden 2 des Hauptbehälters 1 ist das Ventil 10 angeordnet, das mit seinen beiden starr miteinander verbundenen, einen Winkel von hier 90° einschließenden Klappen 11 und 12 die Kammer 8 wechselweise mit dem Zulauf 7 und damit mit dem Volumen im Hauptbehälter 1 oder über den Zulauf 13 mit dem Volumen des Speicherbehälters 3 verbindet. Die im Bereich des Ventils 10 einen quadratischen oder rechteckigen Querschnitt (siehe Figur 2) entsprechend der Form der Klappen 11 und 12 besitzende Kammer 8 weist zwei sich bezüglich des Ventils 10 gegenüberliegende Ventilsitze 14 und 15 auf.

Die beiden Ventilklappen 11 und 12 sind um die Achse 16 schwenkbar gelagert. Ein Einfrieren oder Festsetzen durch Paraffinausscheidung (bei Dieselkraftstoff) im Winter wird durch den Zufluß warmen Kraftstoffs aus dem Rücklauf 4 vermieden, der das Ventil umgibt. In Abhängigkeit von der Stellung des Schwimmers 17 des ferner den Arm 18 aufweisenden Pegelsensors liegt eine der Klappen 11 und 12 auf dem zugeordneten Ventilsitz 14 bzw. 15 dichtend auf, so daß die jeweils andere Klappe eine Strömungsverbindung zwischen einem der Behälter einerseits und der Kammer 8 und damit dem Vorlauf 9 andererseits herstellt. Mit ausgezogenen Linien ist der Fall angenommen, daß der Pegel im Hauptbehälter 1 am Ort des Schwimmers 17 z. B. während einer Kurvenfahrt einen vorgegebenen Minimalwert 19 unterschritten hat. In diesem Falle erfolgt gemäß dem ausgezogen gezeichneten Strömungspfeil die Speisung der Maschine mit Kraftstoff aus dem Speicherbehälter 3. Liegt dagegen ein höherer Kraftstoffpegel im Behälter 1 vor - der Pegel bei gefülltem Behälter 1 ist bei 20 angedeutet -, so ist unter der Wirkung des Schwimmers 17 die Ventilklappe 12 von dem Ventilsitz 15 in die durch unterbrochene Linien angedeutete Position verschwenkt, und auch die Ventilklappe 11 hat ihre andere, durch unterbrochene Linien angedeutete Lage erreicht, in der sie sich dichtend auf dem zugeordneten Ventilsitz 14 abstützt. Demgemäß ist jetzt eine Kraftstoffbelieferung der Maschine nur aus dem Hauptbehälter 1 möglich.

Mit der Erfindung ist demgemäß mit geringem zusätzlichen Aufwand eine gattungsgemäße Behälteranordnung geschaffen, die eine automatische Reihenfolge der Kraftstoffbelieferung der Brennkraftmaschine zunächst aus dem Hauptbehälter, dann aus dem Speicherbehälter sicherstellt. Verständlicherweise hat diese Anordnung auch die erwünschten günstigen Eigenschaften bei Kurvenfahrt.

Die Nachlieferung von Kraftstoff beim Tanken aus dem Hauptbehälter 1 in den Speicherbehälter kann außer über den Rücklauf 4 durch Leckagen im Bereich des Ventils 10 erfolgen.

## Patentansprüche

1. Kraftstoff-Behälteranordnung zur Speisung einer Brennkraftmaschine mit
einem Kraftstoffvorlauf (9), durch den Kraftstoff aus der Kraftstoff-Behälteranordnung förderbar ist,
einem in einem befüllbaren Hauptbehälter (1) angeordneten Speicherbehälter (3), in den eine Kraftstoffrückleitung (4) einmündet,
einem Ventil (10), über das der Speicherbehälter (3) mit dem Kraftstoffvorlauf (9) verbindbar ist, und
einem Pegelsensor (17, 18), über den das Ventil (10) nur bei Unterschreitung eines vorgegebenen Mindest-Kraftstoffpegels in dem Hauptbehälter (1) den Kraftstoffvorlauf (9) mit dem Speicherbehälter (3) verbindend betätigt ist,
dadurch gekennzeichnet, daß der Pegelsensor (17, 18) im Hauptbehälter (1) ist, und
daß das Ventil (10) den Kraftstoffvorlauf (9) wechselweise mit dem Hauptbehälter (1) oder dem Speicherbehälter (3) verbindet.

2. Anordnung nach Anspruch 1, dadurch gekennzeichnet, daß der Pegelsensor einen mit dem Ventil (10) mechanisch verbundenen Schwimmer (17) enthält.

3. Anordnung nach Anspruch 1 oder 2, dadurch gekennzeichnet, daß der Speicherbehälter (3) bodennah in Leckageverbindung mit dem Hauptbehälter (1) steht und einen in diesen führenden Überlauf (5) aufweist.

4. Anordnung nach Anspruch 3, dadurch gekennzeichnet, daß der Überlauf (5) ein Fallrohr (6) enthält, das hauptbehälterseitig unmittelbar vor dem Ventil (10) mündet.

5. Anordnung nach einem der Ansprüche 1 bis 4, dadurch gekennzeichnet, daß das am Hauptbehälterboden (2) gelagerte Ventil (10) mit seinen aktiven Teilen (11, 12) in eine in eine Wand des Speicherbehälters (3) eingearbeitete, mit dem Vorlauf (9) verbundene Kammer (8) hineinragt.

6. Anordnung nach Anspruch 5, dadurch gekennzeichnet, daß das Ventil (10) als aktive Teile zwei starr miteinander unter Bildung eines Winkels verbundene Klappen (11, 12) aufweist, die wechselweise dichtend auf Ventilsitzen (14, 15) an der Kammer (8) aufliegen.

## Claims

1. Fuel tank arrangement for the purpose of supplying an internal combustion engine comprising a fuel supply line (9) by means of which fuel is conveyed from the fuel tank arrangement, a storage container (3) disposed in a fillable main container (1), into which storage container issues a fuel return line (4), a valve (10) by means of which the storage container (3) can communicate with the fuel supply line (9), and furthermore a level sensor (17, 18) byway of which the valve (10) is actuated connecting the fuel supply line (9) with the storage container (3) only when a predetermined minimum fuel level in the main container (1) is not achieved, characterised in that the level sensor (17,18) is in the main container (1) and that the valve (10) connects the fuel supply line (9) alternately to the main container (1) or the storage container (3).

2. Arrangement according to claim 1, characterised in that the level sensor comprises a float (17) which is mechanically connected to the valve (10).

3. Arrangement according to claim 1 or 2, characterised in that the storage container (3) is connected in close proximity to the base to the main container (1) in such a manner as to allow the passage of any leakage and comprises an overflow (5) which leads into the said main container.

4. Arrangement according to claim 3, characterised in that the overflow (5) comprises a down pipe (6) which issues at the main container side immediately in front of the valve (10).

5. Arrangement according to any one of claims 1 to 4, characterised in that the valve (10) mounted on the main container base (2) protrudes with its active parts (11, 12) into a chamber (8) provided in a wall of the storage container (3) and connected to the supply line (9).

6. Arrangement according to claim 5, characterised in that the valve (10) comprises as active parts two flaps (11, 12) which are rigidly connected to each other whilst forming an angle and lie alternately in a sealing manner on valve seats (14, 15) at the chamber (8).

## Revendications

1. Agencement de réservoir de carburant pour l'alimentation d'un moteur à combustion interne, comprenant un conduit d'alimentation en carburant (9) par lequel le carburant peut être transporté à partir de l'agencement de réservoir de carburant,
un réservoir de réserve (3) dans lequel débouche un conduit (4) de reflux du carburant et qui est disposé dans un réservoir principal (1) dont il est possible de faire le plein,
une soupape (10) par laquelle le réservoir de réserve (3) peut être raccordé au conduit d'alimentation en carburant (9) et
un détecteur de niveau (17, 18) par lequel la soupape (10) ne peut être actionnée, de manière à raccorder le conduit d'alimentation en carburant (9) au réservoir de réserve (3), que lorsque le niveau de carburant se trouvant dans le réservoir principal (1) descend au-dessous d'un minimum prescrit,
caractérisé en ce que le détecteur de niveau (17, 18) est dans le réservoir principal (1) et en ce que la soupape (10) raccorde le conduit d'alimentation en carburant (9) sélectivement avec le réservoir principal (1) ou avec le réservoir de réserve (3).

2. Agencement selon la revendication 1, caractérisé en ce que le détecteur de niveau comprend un flotteur (17) relié mécaniquement à la soupape (10).

3. Agencement selon la revendication 1 ou 2, caractérisé en ce que le réservoir de réserve (3) est, à proximité du fond, en communication de fuite avec le réservoir principal (1) et comprend un trop-plein (5) menant dans ce dernier.

4. Agencement selon la revendication 3, caractérisé en ce que le trop-plein (5) comprend un tuyau de descente (6) qui débouche du côté du réservoir principal immédiatement en amont de la soupape (10).

5. Agencement selon l'une des revendications 1 à 4, caractérisé en ce que les parties actives (11, 12) de la soupape (10) montée dans le fond (2) du réservoir principal pénètrent dans une chambre (8) réalisée dans une paroi du réservoir de réserve (3) et communiquant avec le conduit d'alimentation (9).

6. Agencement selon la revendication 5, caractérisé en ce que les parties actives de la soupape (10) consistent en deux clapets (11, 12) solidarisés l'un de l'autre en inscrivant un angle et reposant de manière étanche sélectivement contre des sièges de soupape (14, 15) que loge la chambre (8).
